# EUROPEAN PATENT APPLICATION

(11) **EP 4 831 830 A1**
(43) Date of publication of application: **28.10.2026**
(21) Application number: 26164698.8
(22) Date of filing: 13.03.2026
(51) Int. Cl.: G06F 16/25

(54) **SYSTEM AND METHOD FOR GENERATIVE ARTIFICIAL INTELLIGENCE (AI) ASSISTED DATA MAPPING**

(30) Priority: 25.04.2025 IN 202521040208
(71) Applicant: Tata Consultancy Services Limited, Maharashtra (IN)
(72) Inventor: BEDAGKAR, Arihant, 411057 Pune, Maharashtra (IN); MITRA, Sayandeep, 700160 Kolkata, West Bengal (IN); MEDICHERLA, Raveendra Kumar, 560066 Bengaluru, Karnataka (IN); NAIK, Ravindra Dinkar, 411057 Pune, Maharashtra (IN)
(74) Representative: Goddar, Heinz J.

(57) **Abstract**

Traditional data mapping relies on manual techniques making process labor-intensive and prone to human error. The present disclosure enriches a plurality of source tables, a plurality of target tables, one or more source fields and one or more target fields to determine one or more logical names. Semantic types are assigned to each of the one or more source fields and the one or more target fields. A similarity score is then generated for each of the filtered one or more source fields corresponding to the one or more target fields. A ranked list of matches is generated, and one or more matches is selected from least a subset of ranked list of matches. One or more transformation logics are generated, based on selected one or more matches using data pertaining to one or more target fields and one or more source fields or one or more Natural Language specifications.

## Description

### CROSS-REFERENCE TO RELATED APPLICATIONS AND PRIORITY

The present application claims priority to Indian application no. 202521040208, filed on April 25, 2025.

### TECHNICAL FIELD

The disclosure herein generally relates to data mapping, and, more particularly, to a system and method for Generative Artificial Intelligence (AI) assisted data mapping.

### BACKGROUND

Data mapping is a crucial step during application migration and application integration. Data (model) mapping comprises "schema matching" to identify semantically equivalent fields between two schemas and "transformation logic", a set of rules for converting data from one schema to another. In current industry practice, data mapping is largely manual, performed by domain experts.

Organizations that rely on legacy applications for their data processing spend significant time and effort modernizing their applications. Such application modernization requires data migration from the existing legacy applications to newer applications. For data migration, the correctness of data mapping is critical. Failures in data mapping can have significant and widespread consequences for organizations. Incorrectly mapped data can trigger cascading issues that compromise the integrity, accuracy, and usability of the data. For instance, if key fields are mapped incorrectly or be placed in the wrong fields, data might fail to migrate, thus creating inconsistencies between systems. This undermines the reliability of downstream data analysis, reporting, and decision-making processes. Incorrect data mapping also leads to increased costs and project delays.

Modern enterprises generate vast amounts of data from multiple sources, such as cloud platforms, IoT devices, applications, and databases. Manually mapping large-scale, heterogeneous datasets across various schemas is both time-consuming and prone to human error. The sheer volume and variety of data make it difficult for data engineers to efficiently manage mapping without automated assistance.

The industry today largely relies on manual techniques for data mapping. This reliance makes the process labor-intensive and significantly prone to human error. While some of the existing popular tools provide graphical assistance for data mapping, the actual identification of relationships and transformation logic remains a manual task. Discussions with some of the subject matter experts (SMEs) and/or Business Partners (BPs), engaged in large-scale data migration projects, revealed that approximately 30-50% of the total project time is dedicated solely to data mapping tasks, which include understanding the schema and business dependencies, identifying matches on both sides, and writing the transformation logic for each field.

Some of the existing Generative language models have been trained to produce human-like text and have been applied to a wide range of tasks without requiring additional training. Some of the existing sentence embeddings have seen significant improvements in recent years, particularly for various Natural Language Processing (NLP) tasks (known in the art), with a focus on semantic similarity (as known in the art). Large Language Models (LLMs) have been applied to various enterprise data operations, including schema matching (as known in the art). However, these approaches often suffer from costly workflows and a lack of results based on real-life case studies.

The problem of schema matching has been extensively studied in both industry and academia. The current standard practice for schema matching in industry is manual, relying heavily on human expertise. A major challenge has been the lack of high-quality datasets, which have limited the applicability of Machine Learning (ML)-based solutions (known in the art). Recent advancements in NLP have facilitated semantic matching between source and target schemas. However, both these methods are unsuitable for enterprise practice, as these require significant manual intervention for data tagging. More recent works have leveraged the power of LLMs to make significant strides in schema matching. However, these evaluations are based on openly available health datasets, with which modern LLMs are well-versed and potentially trained. Furthermore, these studies have not incorporated table and field enrichment while identifying matches, which can lead to a loss of context. Additionally, existing works do not address the challenge of context size for large-scale industrial schemas.

Code generation using LLMs has become an extremely popular research topic in the software engineering domain. The task of generating transformation logic in data mapping can be framed as a code generation problem, where LLMs are expected to generate the possible programs based on the semantic understanding they have gained from the provided information. This is distinct from general code generation tasks, where the desired output or the requirements was specified, and the LLM is expected to produce functional code. However, these existing works suffer trust issues regarding generated code.

### SUMMARY

Embodiments of the present disclosure present technological improvements as solutions to one or more of the above-mentioned technical problems recognized by the inventors in conventional systems. For example, in one embodiment, a method for Generative Artificial Intelligence (AI) assisted data mapping. is provided. The method includes receiving, via one or more hardware processors, one or more physical names of (i) a plurality of source tables comprised in a source schema, (ii) a plurality of target tables comprised in a target schema, (iii) one or more source fields comprised in the plurality of source tables, (iv) one or more target fields comprised in the plurality of target tables, and (v) one or more Natural Language specifications; enriching, by using one or more Large Language Models (LLMs) via the one or more hardware processors, the plurality of source tables, the plurality of target tables, the one or more source fields and the one or more target fields using one or more functionalities and one or more descriptions associated with the plurality of source tables, the plurality of target tables, the one or more source fields and the one or more target fields for: determining one or more logical names of (i) the plurality of source tables, (ii) the plurality of target tables, (iii) the one or more source fields and (iv) the one or more target fields; and (ii) assigning one or more semantic types to each of (i) the one or more source fields and (ii) the one or more target fields, by applying a pre-defined configurable set of rules, based on the determined one or more logical names; filtering, via the one or more hardware processors, each of the one or more source fields corresponding to the one or more target fields, based on the assigned one or more semantic types; generating, via the one or more hardware processors, one or more vector embeddings for each of the filtered one or more source fields and one or more vector embeddings corresponding to the one or more target fields, using one or more sentence embedding models; comparing, via the one or more hardware processors, the generated one or more vector embeddings for each of the filtered one or more source fields and the one or more vector embeddings corresponding to the one or more target fields; generating, via the one or more hardware processors, a similarity score, for each of the filtered one or more source fields corresponding to the one or more target fields, based on the comparison, using one or more pre-defined similarity techniques; generating, via the one or more hardware processors, a ranked list of the one or more source fields corresponding to the one or more target fields, based on the generated similarity score; selecting, via the one or more hardware processors, at least a subset of ranked list *x* of the one or more source fields corresponding to the one or more target fields from the generated ranked list of the one or more source fields corresponding to the one or more target fields, based on a pre-defined threshold k; performing, via the one or more hardware processors, at least one of the following: (i) selecting one or more matches of the one or more source fields corresponding to the one or more target fields amongst at least the subset of ranked list x; or (ii) re-ranking the one or more source fields (x *- k)* from the subset of ranked list *x* using the one or more Large Language Models (LLM) to obtain a re-ranked list; generating, via the one or more hardware processors, one or more transformation logics by prompting the one or more Large Language Models (LLM), using a prompt template, based on the one or more selected matches or the obtained re-ranked list, and using at least one of: (i) an associated data pertaining to the one or more target fields and the one or more source fields corresponding to the one or more selected matches or the one or more Natural Language specifications; or (ii) an associated data being generated that is pertaining to the one or more target fields; and validating, via the one or more hardware processors, the generated one or more transformation logics and converting the validated one or more transformation logics into one or more user preferred programming languages.

In another aspect, there is provided a system for Generative Artificial Intelligence (AI) assisted data mapping. The system comprises: a memory storing instructions; one or more communication interfaces; and one or more hardware processors coupled to the memory via the one or more communication interfaces, wherein the one or more hardware processors are configured by the instructions to: receive one or more physical names of (i) a plurality of source tables comprised in a source schema, (ii) a plurality of target tables comprised in a target schema, (iii) one or more source fields comprised in the plurality of source tables, (iv) one or more target fields comprised in the plurality of target tables, and (v) one or more Natural Language specifications. The system includes enriching, by using one or more Large Language Models (LLMs), the plurality of source tables, the plurality of target tables, the one or more source fields and the one or more target fields using one or more functionalities and one or more descriptions associated with the plurality of source tables, the plurality of target tables, the one or more source fields and the one or more target fields for: determining one or more logical names of (i) the plurality of source tables, (ii) the plurality of target tables, (iii) the one or more source fields and (iv) the one or more target fields; and (ii) assigning one or more semantic types to each of (i) the one or more source fields and (ii) the one or more target fields, by applying a pre-defined configurable set of rules, based on the determined one or more logical names; filtering each of the one or more source fields corresponding to the one or more target fields, based on the assigned one or more semantic types; generating one or more vector embeddings for each of the filtered one or more source fields and one or more vector embeddings corresponding to the one or more target fields, using one or more sentence embedding models; comparing the generated one or more vector embeddings for each of the filtered one or more source fields and the one or more vector embeddings corresponding to the one or more target fields; generating a similarity score, for each of the filtered one or more source fields corresponding to the one or more target fields, based on the comparison, using one or more pre-defined similarity techniques; generating a ranked list of the one or more source fields corresponding to the one or more target fields, based on the generated similarity score; selecting at least a subset of ranked list x of the one or more source fields corresponding to the one or more target fields from the generated ranked list of the one or more source fields corresponding to the one or more target fields, based on a pre-defined threshold k; performing at least one of the following: (i) selecting one or more matches of the one or more source fields corresponding to the one or more target fields amongst at least the subset of ranked list x; or (ii) re-ranking the one or more source fields (x *- k)* from the subset of ranked list x using the one or more Large Language Models (LLM) to obtain a re-ranked list; generating one or more transformation logics by prompting the one or more Large Language Models (LLM), using a prompt template, based on the one or more selected matches or the obtained re-ranked list, and using at least one of: (i) an associated data pertaining to the one or more target fields and the one or more source fields corresponding to the one or more selected matches or the one or more Natural Language specifications; or (ii) an associated data being generated that is pertaining to the one or more target fields; and validating the generated one or more transformation logics and converting the validated one or more transformation logics into one or more user preferred programming languages.

In yet another aspect, there are provided one or more non-transitory machine-readable information storage mediums comprising one or more instructions which when executed by one or more hardware processors cause receiving one or more physical names of (i) a plurality of source tables comprised in a source schema, (ii) a plurality of target tables comprised in a target schema, (iii) one or more source fields comprised in the plurality of source tables, (iv) one or more target fields comprised in the plurality of target tables, and (v) one or more Natural Language specifications; enriching, by using one or more Large Language Models (LLMs), the plurality of source tables, the plurality of target tables, the one or more source fields and the one or more target fields using one or more functionalities and one or more descriptions associated with the plurality of source tables, the plurality of target tables, the one or more source fields and the one or more target fields for: determining one or more logical names of (i) the plurality of source tables, (ii) the plurality of target tables, (iii) the one or more source fields and (iv) the one or more target fields; and (ii) assigning one or more semantic types to each of (i) the one or more source fields and (ii) the one or more target fields, by applying a pre-defined configurable set of rules, based on the determined one or more logical names; filtering each of the one or more source fields corresponding to the one or more target fields, based on the assigned one or more semantic types; generating one or more vector embeddings for each of the filtered one or more source fields and one or more vector embeddings corresponding to the one or more target fields, using one or more sentence embedding models; comparing the generated one or more vector embeddings for each of the filtered one or more source fields and the one or more vector embeddings corresponding to the one or more target fields; generating a similarity score, for each of the filtered one or more source fields corresponding to the one or more target fields, based on the comparison, using one or more pre-defined similarity techniques; generating a ranked list of the one or more source fields corresponding to the one or more target fields, based on the generated similarity score; selecting at least a subset of ranked list *x* of the one or more source fields corresponding to the one or more target fields from the generated ranked list of the one or more source fields corresponding to the one or more target fields, based on a pre-defined threshold k; performing at least one of the following: (i) selecting one or more matches of the one or more source fields corresponding to the one or more target fields amongst at least the subset of ranked list *x*; or (ii) re-ranking the one or more source fields (*x - k*) from the subset of ranked list *x* using the one or more Large Language Models (LLM) to obtain a re-ranked list; generating one or more transformation logics by prompting the one or more Large Language Models (LLM), using a prompt template, based on the one or more selected matches or the obtained re-ranked list, and using at least one of: (i) an associated data pertaining to the one or more target fields and the one or more source fields corresponding to the one or more selected matches or the one or more Natural Language specifications; or (ii) an associated data being generated that is pertaining to the one or more target fields; and validating the generated one or more transformation logics and converting the validated one or more transformation logics into one or more user preferred programming languages.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for Generative Artificial Intelligence (GenAI) assisted data mapping, according to some embodiments of the present disclosure.
FIG. 2 is a functional block diagram of the system of FIG. 1 for GenAI assisted data mapping, according to some embodiments of the present disclosure.
FIGS. 3A through 3C are flow diagrams illustrating the steps involved in the method for GenAI assisted data mapping, according to some embodiments of the present disclosure.
FIGS. 4A and 4B illustrate a data mapping scenario, according to some embodiments of the present disclosure.
FIG. 5 illustrates an existing assistant tool, Auto-MI (Automatic-Migration) (Automatic-Migration) (known in the art)built using the classical AI approach.
FIG. 6 illustrates Recall Scores [Recall@1, Recall@5, Recall@20] for Schema Matching Experiments alongside the performance of schema matching using Auto-MI (Automatic-Migration) (known in the art), according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

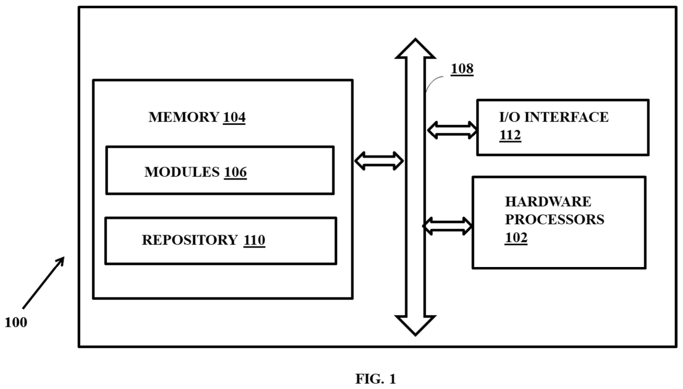

Referring now to the drawings, and more particularly to FIG. 1 through FIG. 6, where similar reference characters denote corresponding features consistently throughout the figures, there are shown preferred embodiments, and these embodiments are described in the context of the following exemplary system and/or method.

In today's data-driven world, data mapping plays a pivotal role in ensuring the correctness of data integration, data migration, and data transformation across Information Technology (IT) systems. Data mapping is the process of associating source data fields with target data fields, typically as part of larger tasks such as ETL (Extract, Transform, Load) workflows or system migrations. In a typical enterprise environment, data is often stored in heterogeneous systems, leading to large schemas with hundreds of tables and thousands of fields. For data migration and integration tasks, the data needs to be extracted, transformed, or consolidated, all of which require data mapping.

Data mapping consists of two major components: schema matching and transformation logic. Each of these components plays a crucial role in ensuring the success of data mapping, particularly in scenarios involving heterogeneous data sources or complex transformation requirements.

Schema matching is the initial step in data mapping, referring to the task of identifying data between elements (e.g., tables, fields or attributes) across different data schemas. This task can be highly challenging due to variations in naming conventions, data types, structures, and contextual differences between source and target schemas. The goal of schema matching is to accurately map fields from the source schema to their equivalent counterparts in the target schema, ensuring that the data remains meaningful and consistent during migration and/or integration.

Transformation logic is the second major component of data mapping, shifting the focus from structural alignment to functional alignment. Once schema matching is completed, transformation logic must be specified to convert, reshape, or restructure the source data so that it fits into the target schema.

This involves applying operations such as data type conversions, aggregations, splitting, merging, and data validation rules. In cases involving complex business logic or metadata discrepancies, specifying precise transformation logic can be particularly intricate and challenging.

In one of the existing works Auto-MI (Automatic-Migration) (known in the art) (represented by the Auto-MI (Automatic-Migration) 224), which used Machine Learning (ML) techniques on historical mappings and domain knowledge (the domain knowledge module 226) for schema matching, and Programming by Examples (PBE) (known in the art), a program synthesis approach, for generating transformation logic. The domain knowledge includes the meaning of data elements, domain-specific terminologies, taxonomies, and relationships between data elements. Although Auto-MI (Automatic-Migration) was positively received by some of the Business Partners (BPs) or the subject matter experts (SMEs) for reducing manual effort, it had limitations, such as a heavy dependence on domain knowledge, the availability of historical mappings for schema matching, and sample data for identifying transformation logic. Techniques such as PBE also struggled with scalability, handling complex and/or unseen transformations, and addressing edge cases, especially with incomplete user input.

Data Mapping Process: Large-scale data mapping is a collaborative, manual exercise carried out by a team of experts with varying knowledge. This team consists of experts from the source and target systems (ST experts), data transformation experts, and business analysts with domain knowledge (referred to collectively as users in the present disclosure). Business analysts and data transformation experts work together to analyze the source and target schemas and propose schema matching based on their domain knowledge and historical data transformation experience. This matching document is validated by source and target systems (or source and target (ST) experts), who confirm whether the matching is correct. Generally, this is an iterative process and is finalized after several rounds of review. In the next stage, transformation logic is created by understanding the data representation, the semantic meaning of the data, and by examining sample data. These rules undergo a similar review process to schema matching before they are finalized. Typically, in an industrial setting, about 40% of the mappings are multi-source mappings, while the remaining are 1:1 direct mappings.

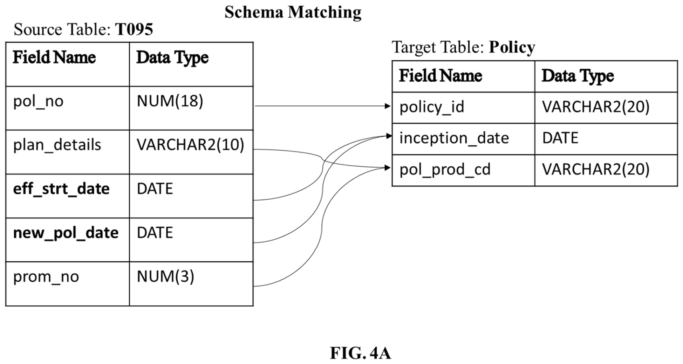

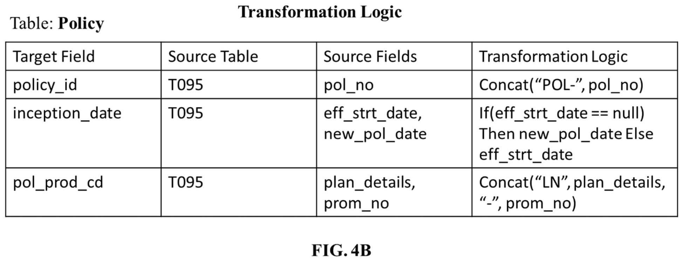

During the mapping process, analysts and transformation experts may potentially use visual aids (known in the art) to map the tables and fields. Such aids allow users to add tables and fields to a canvas, draw lines between schema fields (as represented in FIGS. 4A and 4B), and use drag-and-drop facilities to construct mapping rules visually. However, the visual aids themselves do not provide mapping recommendations.

Auto-MI (Automatic-Migration - Data Mapping Assistant):: The observations from the problem space highlighted the need for an assistant that, for every field in the target schema, would automatically suggest the best possible source fields from which the data should be migrated and how the data should be transformed during this transfer. To address this, Auto-MI (Automatic-Migration) (known in the art) was proposed that ranks the best source field matches and generates transformation programs, analogous to rules, that would transform the source data into target data.

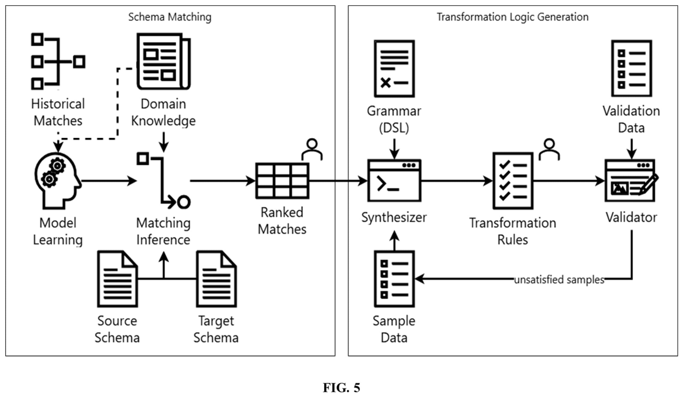

The workflow of Auto-MI (Automatic-Migration) (known in the art) is presented in FIG. 5. The schema matching of the tool is performed by building a model using historical data mappings and domain knowledge. The first stage is the enrichment of the source and target schemas, where the physical names, i.e., the abbreviated forms of the field names, are expanded to their logical forms (which are a more meaningful, and free of ambiguity). For example, eff_strt_date is expanded to an effective start date. In the next step, semantic types are assigned to each field. These semantic types provide more business context than standard data types. There are 15 predefined semantic types, such as MONEY, STRING, DAY, MONTH, CODE, etc. For instance, MONEY, PERCENTAGE, and AGE are semantic types that fall under the broader category of NUMBER. Consider the field 'pol_prod_cd' in FIGS. 4A and 4B, which is expanded into policy product code. The semantic type assigned to this field is of type CODE, whereas its data type is VARCHAR. The user reviews the enriched forms and provides feedback, allowing the tool to learn and rerun the enrichment process iteratively until satisfaction. Next, the likely source-field matches for each target field are identified and ranked. The user reviews these suggestions, marking them as correct or incorrect. This step, similar to the enrichment phase, is repeatable, with the tool learning from the feedback post each iteration.

Transformation logic for every target field and its corresponding matched source fields was generated as programs using the PBE approach. These transformations can range from simple copy and concatenations to complex joins and aggregations. These operations were identified from historical data mappings, and synthesizers were created for each semantic type. The intent of using sample data as specifications for synthesis emerged from discussions with the Business Partners (BPs) or the subject matter experts (SMEs), who noted that users often have a clear idea of the desired transformation logic but struggle to express it in an error-free, unambiguous technical format.

The Auto-MI (Automatic-Migration) (known in the art) was provided to multiple BPs or the subject matter experts (SMEs) for evaluation, with results. Their feedback highlighted its usefulness as a strong starting point, and the experiments confirmed that the schema matching phase would improve and become intelligent over time with availability of more knowledge and data. The transformation logic generation phase helped users validate their logic and prevent errors. However, several areas for improvement were also identified as described below:

Schema Matching: 1) In the short term, the incomplete domain knowledge posed a challenge, causing the tool to underperform when encountering new and unseen scenarios. For example, during a particular data mapping exercise, the list of accepted holidays for a specific region was not present in the tool's knowledge base, resulting in straightforward matches appearing lower in the generated ranked list.

2) The ranked list suggested by the Auto-MI (Automatic-Migration) (known in the art) lacked any explanation for the rankings, which created difficulties in terms of usability. Users felt disconnected and confused about why a source field was ranked. One major challenge arising from this lack of information was when there was an 'm:1' case, i.e., when m source fields were mapped to a particular target field. In such cases, the tool was unable to explicitly point this out to the user, thus placing a heavy burden on the user to identify this situation on their own.

Transformation Logic: 1) The availability of target data corresponding to sample source data was a challenge for each target field. BPs or the subject matter experts (SMEs) took a stand that for many simple cases, providing sample data was unnecessary and that no additional specification was needed to generate the transformation logic. Additionally, while examples were commonly used, natural language for describing the transformation logic was also frequently employed. BPs or the subject matter experts (SMEs) expected a multi-modal approach, allowing users to choose their preferred format for providing specifications.

2) Being a purely symbolic approach, it was challenging to build a program search procedure on top of the PBE framework for more complicated multi-row transformations such as joins, aggregations, and filters. Furthermore, the quality of the synthesized programs depended heavily on the grammar used. If the grammar was insufficient to capture the sample data, no transformation program could be synthesized. This is a major challenge in data mapping, as new transformation scenarios are constantly emerging.

Large Language Models (LLMs): Potential All-Rounder LLMs have emerged as powerful tools for a variety of Natural Language Processing (NLP) tasks in the industry (known in the art). The ability of the LLMs to understand, generate, and manipulate natural language text has made them particularly attractive for the complex task of data mapping. Based on the research into the LLMs and their applications, the following features convinced the system of the present disclosure of their suitability for the problem of creating an assistant to aid in data mapping by automatically suggesting the schema matchings and the transformation logic.
- LLMs can understand natural language input, fulfilling our need for multi-modal specifications.
- LLMs can provide explanations, as demonstrated in one of the existing works. This feature was crucial based on BP's feedback, as explanations enhance understanding and build confidence in the tool's output.
- Code generation using LLMs has already achieved a degree of success (known in the art). Since transformation logic constitutes a set of small programs, LLMs are a viable option for this task.
- LLMs are trained in massive amounts of text data, enabling them to acquire knowledge across a wide range of industrial domains. This makes them less reliant on specific domain knowledge for schema matching.
- Industrial schemas often vary in the amount of meta-data (such as field descriptions, value constraints, and permissible lists of values) based on organizational culture. LLMs enable us to effectively utilize any available information as context.
- LLMs provide a solution with a unified framework, streamlining the management of schema enrichment, matching, and transformation logic generation by consolidating these processes into a single, cohesive workflow.
While LLMs have shown promise for the problem space which were aimed at tackling, they come with their fair share of challenges. Some of the major challenges that need to be considered are:
- Hallucinations from LLMs can occur in the form of fabricated metadata or field names that do not exist in the provided schema. Non-existent functions or invalid operations can also be generated when producing transformation logic.
- LLMs responses lack absolute confidence, as they tend to provide several "best guesses". Human intervention is essential to validate and finalize the mappings generated.
- The probabilistic nature of LLMs results in generating different outputs for the same input across different invocations. This inconsistency must be considered when designing any solution.
- There is a limit to the token processing capability of LLMs .When considering enterprise schemas with hundreds of tables and thousands of fields, processing such large datasets is not a straightforward task for LLMs.
- It is necessary to account for the running costs of using LLMs for large-scale data mapping tasks involving industry standard schemas.

The present disclosure addresses the above-mentioned issues by providing a system and method for Generative Artificial Intelligence (GenAI) assisted data mapping. In the present disclosure a plurality of source tables, a plurality of target tables, one or more source fields and one or more target fields are enriched using one or more functionalities and one or more descriptions associated with the plurality of source tables, the plurality of target tables, the one or more source fields and the one or more target fields. Further, one or more logical names of (i) the plurality of source tables, (ii) the plurality of target tables, (iii) the one or more source fields and (iv) the one or more target fields are determined based on the enrichment. Furthermore, one or more semantic types compatible with one or more rules are assigned to each of (i) the one or more source fields and (ii) the one or more target fields, based on the determined one or more logical names. Each of the one or more source fields corresponding to the one or more target fields are filtered, by applying a pre-defined configurable set of rules, based on the assigned one or more semantic types. One or more vector embeddings are generated for each of the filtered one or more source fields and one or more vector embeddings corresponding to the one or more target fields, using one or more sentence embedding models. The present disclosure compares the generated one or more vector embeddings for each of the filtered one or more source fields and the one or more vector embeddings corresponding to the one or more target fields. Further, a similarity score is generated for each of the filtered one or more source fields corresponding to the one or more target fields, based on the comparison, using one or more pre-defined similarity techniques. Furthermore, a ranked list of the one or more source fields corresponding to the one or more target fields, based on the generated similarity score. The present disclosure selects at least a subset of ranked list *x* of the one or more source fields corresponding to the one or more target fields from the generated ranked list of the one or more source fields corresponding to the one or more target fields, based on a pre-defined threshold *k*. The present disclosure performs at least one of the following steps. One or more matches of the one or more source fields corresponding to the one or more target fields are selected amongst at least the subset of ranked list *x.* Alternatively, the one or more source fields (*x - k*) are re-ranked from the subset of ranked list *x* using one or more Large Language Models (LLM) to obtain a re-ranked list. The present disclosure generates one or more transformation logics by prompting one or more Large Language Models (LLM), using a prompt template, based on the one or more selected matches or the obtained re-ranked list. Finally, the generated one or more transformation logics are validated and converted into one or more user preferred programming languages.

FIG. 1 illustrates an exemplary system 100 for Generative Artificial Intelligence (GenAI) assisted data mapping, according to some embodiments of the present disclosure. In an embodiment, system 100 includes or is otherwise in communication with hardware processors 102, at least one memory such as a memory 104, and an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For this purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

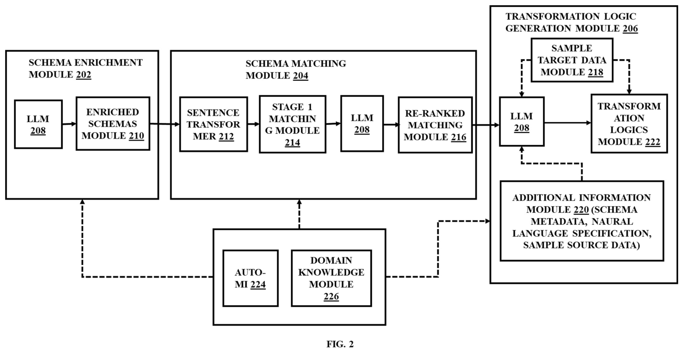

The plurality of modules 106 includes programs or coded instructions that supplement applications or functions performed by the system 100 for Generative Artificial Intelligence (AI) assisted data mapping. The plurality of modules 106, amongst other things, can include routines, programs, objects, components, and data structures, which perform particular tasks or implement particular abstract data types. The plurality of modules 106 may also be used as signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for Generative Artificial Intelligence (AI) assisted data mapping. In an embodiment, the modules 106 include a schema enrichment module 202, a schema matching module 204, a transformation logic generation module 216, an Auto-MI (Automatic-Migration) 224 and a domain knowledge module 226. The schema enrichment module 202 includes a Large Language Model (LLM) 208 and an enriched schemas module 210. The schema matching module 204 includes a sentence transformer 212, a stage 1 matching module 214 and a re-ranked matching module 216. The transformation logic generation module 206 includes a sample target data module 218, an additional information module 220 and a transformation logics module 222. The modules are depicted in FIG. 2. These modules that are depicted in FIG. 2 are implemented as at least one of a logically self-contained part of a software program, a self-contained hardware component, and/or a self-contained hardware component with a logically self-contained part of a software program embedded into each of the hardware component that when executed perform the above method described herein, in one embodiment of the present disclosure.

The data repository (or repository) 110 may include a plurality of abstracted pieces of code for refinement and data that is processed, received, or generated as a result of the execution of the module(s) 106.

Although the data repository 110 is shown internal to the system 100, it will be noted that, in alternate embodiments, the data repository 110 can also be implemented externally to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

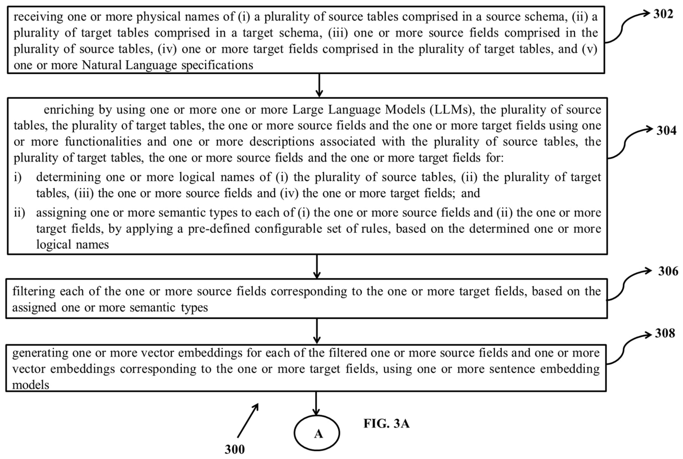

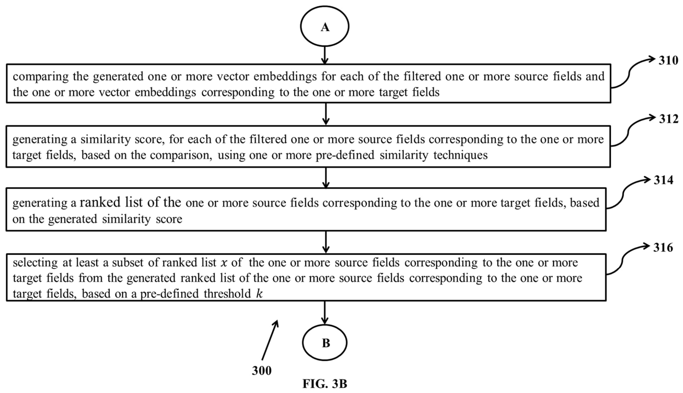

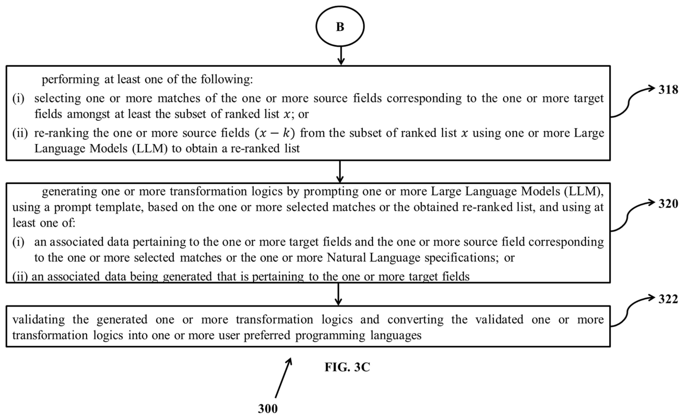

FIGS. 3A through 3C are flow diagrams illustrating a method for Generative Artificial Intelligence (GenAI) assisted data mapping using the systems 100 of FIGS. 1-2, according to some embodiments of the present disclosure. Steps of the method of FIGS. 3A through 3C shall be described in conjunction with the components of FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practically feasible. Further, some steps may be performed simultaneously. At step 302 of the method 300, the one or more hardware processors 102 receive one or more physical names of (i) a plurality of source tables comprised in a source schema, (ii) a plurality of target tables comprised in a target schema, (iii) one or more source fields comprised in the plurality of source tables, (iv) one or more target fields comprised in the plurality of target tables, and (v) one or more Natural Language specifications. For example, T095 represents a source table, and Policy represents a target table (as represented in FIG.4A). Referring to FIG. 4B, policy_id, inception_date and pol_prod_cd represent the one or more target fields, and pol_no, eff_strt_date, new_pol_date, plan_details, prom_no represents the one or more source fields.

At step 304 of the method 300, the LLM 208, the enriched schemas module 210 of the schema enrichment module 202 executed by the one or more hardware processors 102 enriches, by using the LLM 208, the plurality of source tables, the plurality of target tables, the one or more source fields and the one or more target fields using one or more functionalities and one or more descriptions associated with the plurality of source tables, the plurality of target tables, the one or more source fields and the one or more target fields for achieving the following steps. One or more logical names of (i) the plurality of source tables, (ii) the plurality of target tables, (iii) the one or more source fields and (iv) the one or more target fields are determined.

One or more semantic types are assigned to each of (i) the one or more source fields and (ii) the one or more target fields, by applying a pre-defined configurable set of rules, based on the determined one or more logical names. The one or more semantic types comprise an ID, a CODE, a FLAG, a RATE and the like. For example, the semantic types are assigned to a field by considering the relevancy of every component of a field name, their descriptions and the value that they hold. For every semantic type, a repository of related words is obtained. For example, for the semantic type of RATE, using a thesaurus, all the words related to RATE are stored. Further the description provided for a field and the components in the name of the field are considered. If they are similar to the words corresponding to RATE, then that is the semantic type assigned. Additionally, value of the field is considered, i.e., any field which is assigned to the semantic type 'RATE' must have numeric value.

The present disclosure includes three stages for data mapping, Schema Enrichment, Schema Matching and generating Transformation Logic. The three stages of data mapping are defined as tasks so that they use the same prompt template with their task specific instructions and related information along with an output format specified as a JavaScript Object Notation (JSON) schema and an output example in the required format as depicted in Table. 1.

**Table. 1: Prompt Template**

| |
|---|
| ``` 1 { 2 "Task": "Given the following information, 3 perform [task] as a data mapping assistant." , 4 "Information": "[task-specific-information]", 5 "Notes": "[task-specific-notes]", 6 "Output Format": "[json-schema-output-format]", 7 "Output Example": "[output-example-in-json-schema]" 8 } ``` |

The system 100 follows a modular approach with three primary phases: schema enrichment, schema matching, and generating transformation logic. This approach mirrors that of Auto-MI (Automatic-Migration) (known in the art), as it was believed that a stepwise method that involves periodic reviews from the user is the best way to leverage the strengths of Large Language Models (LLMs) while minimizing their drawbacks.

Schema Enrichment: The precursor step to schema matching is schema enrichment. In this phase, the provided (physical) names of tables and fields are expanded into more meaningful, human-readable forms (logical names). Additionally, a semantic type is assigned to each field, based on the type of data it holds.

Matching the expanded source and target schemas provides greater context for the LLM and eliminates the ambiguity often found in physical forms, as noted in prior research/literature. This becomes particularly important where enterprises frequently use their own schema nomenclature, including abbreviations that represent domain-specific terms unique to them and not widely available in public datasets. As a result, Large Language Models (LLMs) may not always recognize these specific terminologies and could inadvertently introduce incorrect context. For instance, a field named PI was encountered in a schema, which the LLM interpreted as Personal Injury within the insurance domain and incorrectly matched it with the Health Status field from the source. However, after correcting the interpretation of field PI to Personal Intimation, the LLM successfully matched PI to the correct source field, Contact Type. This highlights the importance of schema enrichment to ensure accurate context.

In the system 100, the semantic type of a field is treated as a crucial piece of context for the LLM. For example, if a field like Policy Number is identified as an identifier (ID), the LLM approaches the data mapping process differently than it would without that information.

During the enrichment process, Large Language Models (LLMs) consume all available domain and schema information as depicted in Table. 2. Initially, the table names are enriched using their functionality and descriptions (if provided), and these are verified (e.g., say with or without the help of users such as Subject Matter Experts (SMEs) or business partners (BPs)). Next, each field is enriched with its corresponding enriched table name, along with details such as primary keys, foreign keys, and metadata information (if available), to provide context. Finally, the fully enriched table is presented to the user for validation, allowing them to correct any expansions or assigned semantic types.

**Table. 2: Prompt Template for Schema Enrichment**

| |
|---|
| ``` 1 { 2 "Information": { 3 "Table Name": "[table-name]", 4 "Table Metadata": { 5 "Description": "[field-description]", 6 "Relationships": ["[relationships]"] 7 }, 8 "Fields": [ ``` |
| ``` 9 { 10 "Field Name": "[field-name]", 11 "Field Metadata": { 12 "Description": "[field-description]", 13 "Example": "[example]" 14 } 15 } 16 ] 17 } 18 } ``` |

At step 306 of the method 300, the one or more hardware processors 102 filter each of the one or more source fields corresponding to the one or more target fields, based on the assigned one or more semantic types.

At step 308 of the method 300, the sentence transformer 212 of the schema matching module 204 executed by the one or more hardware processors 102 generates one or more vector embeddings for each of the filtered one or more source fields and one or more vector embeddings corresponding to the one or more target fields, using one or more sentence embedding models.

At step 310 of the method 300, the stage 1 matching module 214 of the schema matching module 204 executed by the one or more hardware processors 102 compares the generated one or more vector embeddings for each of the filtered one or more source fields and the one or more vector embeddings corresponding to the one or more target fields.

At step 312 of the method 300, the stage 1 matching module 214 of the schema matching module 204 executed by the one or more hardware processors 102 generates a similarity score, for each of the filtered one or more source fields corresponding to the one or more target fields, based on the comparison, using one or more pre-defined similarity techniques. In the present disclosure, the one or more pre-defined similarity techniques comprise a cosine similarity technique.

At step 314 of the method 300, the stage 1 matching module 214 of the schema matching module 204 executed by the one or more hardware processors 102 generates a ranked list of the one or more source fields corresponding to the one or more target fields, based on the generated similarity score.

At step 316 of the method 300, the stage 1 matching module 214 of the schema matching module 204 executed by the one or more hardware processors 102 select at least a subset of ranked list x of the one or more source fields corresponding to the one or more target fields from the generated ranked list of the one or more source fields corresponding to the one or more target fields, based on a pre-defined threshold *k.*

At step 318 of the method 300, the stage 1 matching module 214 and the re-ranked matching module 216 of the schema matching module 204 executed by the one or more hardware processors 102 performs at least one of the following steps.

One or more matches of the one or more source fields corresponding to the one or more target fields amongst at least the subset of ranked list x are selected. Alternatively, the one or more source fields (*x - k*) from the subset of ranked list *x* are re-ranked using one or more Large Language Models (LLM) to obtain a re-ranked list.

The steps 306 through step 318 are explained in detail in the below sections.

Schema Matching: After enrichment, the enhanced source and target schemas are matched. When Large Language Models (LLMs) were used directly for matching, it was found that only a subset of the provided fields and their metadata were selected. This issue arose due to the token processing limit of Large Language Models (LLMs). To address this, schema matching is performed by the system 100 in stages for each individual target field.

Schema Matching using Sentence Transformers: As a pre-processing step, for each target field, the source fields are filtered based on the compatibility of their semantic types to limit unrelated source fields from being considered for matching. In stage 1, sentence embedding models are utilized to convert the logical names of tables and fields, along with their corresponding metadata, into fixed-size vector representations that capture their semantic meanings in a high-dimensional space. The one or more sentence embedding models comprises at least one of an all-mpnet-base-v2 and a mxbai-embed-large-v1. It is to be understood by a person having ordinary skill in the art or person skilled in the art that use of such exemplary models shall not be construed as limiting the scope of the present disclosure. After generating the embeddings, cosine similarity (known in the art) technique is used to assess the similarity between the vectors of source and target fields. The result of this stage is a ranked list of matches (i.e., ranked list of the one or more source fields corresponding to the one or more target fields), which is presented to the user for review.

In one embodiment of the present disclosure, after stage 1, these matches were presented to the user from the generated ranked list. If the user identifies the correct match, it is selected and finalized for further steps, and that particular target field is excluded from subsequent stages to prevent degradation of the correct match and reduce costs associated with using Large Language Models (LLMs). If the correct match is not found, the candidate source fields are discarded for later stages. It is to be understood by a person having ordinary skill in the art or person skilled in the art that the system 100 is also configured to identify the correct match, which is selected and finalized for further steps, and that particular target field is excluded from subsequent stages to prevent degradation of the correct match and reduce costs associated with using Large Language Models (LLMs), and such configuration of the system for identification and so on shall not be construed as limiting the scope of the present disclosure.

After stage 1, at least a subset of ranked list x of the one or more source fields corresponding to the one or more target fields from the generated ranked list of the one or more source fields corresponding to the one or more target fields, based on a pre-defined threshold k. However, such value of the predefined threshold shall not be construed as limiting the scope of the present disclosure. If the correct match is found, the one or more matches of the one or more source fields corresponding to the one or more target fields amongst at least the subset of ranked list x are selected. If the correct match is not found, the one or more source fields (x - k) from the subset of ranked list x are re-ranked using one or more Large Language Models (LLMs) to obtain a re-ranked list.

Re-ranking using Large Language Models (LLMs): After the verification of Stage 1 (e.g., either by user and/or by the system 100), the top-m candidate source fields (where m is configurable with a default value of 20) are obtained. However, such value of the *m* shall not be construed as limiting the scope of the present disclosure) are selected from the reduced ranked list of possible matches and presented to the LLM for re-ranking, supplemented with any available metadata for the fields as depicted in Table. 3.

**Tabel. 3: Prompt Template for Schema Matching**

| |
|---|
| ``` 1 { 2 "Information": [ 3 { 4 "Source Fields": [ 5 { 6 "Field Name": "[source-field-name]", 7 "Metadata": "[source-field-metadata]" 8 } 9 ], 10 "Target Field": { 11 "Field Name": "[target-field-name]", ``` |
| ``` 12 "Metadata": "[target-field-metadata]" 13 }, 14 "Rank": "[rank]" 15 } 16 } 17 } ``` |

The Large Language Models (LLMs) are also instructed to explicitly identify 'm:1' case and provide explanations for the re-ranking. The re-ranked list is then presented to the user in the familiar format of the top 3 to 5 matches for verification. However, such number of the matches shall not be construed as limiting the scope of the present disclosure. If the correct match(es) are not found, those candidate fields are discarded, and new candidates are added to the list based on their rank. The re-ranking process continues iteratively, with an option to increase the LLM temperature to introduce more randomness for challenging corner cases. In the current context, LLM temperature refers to a parameter found in most LLMs, which control the behavior of the LLM. The higher the temperature, the more varied and random the content generated by the LLM, and vice versa. It is a standard term in LLM research and experimentation.

At step 320 of the method 300, the sample target data module 218, the additional information module 220 and the transformation logics module 222 of the transformation logic generation module 206 are executed by the one or more hardware processors 102 for generating one or more transformation logics by prompting one or more Large Language Models (LLMs), using a prompt template, based on the one or more selected matches and/or the obtained re-ranked list, and using at least one of the following. (i) An associated data pertaining to the one or more target fields and the one or more source field corresponding to the one or more selected matches or the one or more Natural Language specifications or (ii) An associated data being generated that is pertaining to the one or more target fields. Herein, the associated data refers to the (i) data comprised in the one or more source fields comprised in the plurality of source tables, and (ii) data comprised in the one or more target fields comprised in the plurality of target tables.

At step 322 of the method 300, the one or more hardware processors 102 validate the generated transformation logic and convert the validated transformation logics into one or more user preferred programming languages. The one or more user preferred programming languages comprise at least one of a Python, a Structured Query Language (SQL) and the like. The generated transformation logic may also be validated using one or more user inputs, in one embodiment of the present disclosure. Such validation may involve a close review and correction/modification as applicable.

The steps 320 and 322 are explained in detail in the below sections.

Transformation Logic: After the confirmation of the matches for each target field, a field-by-field approach is adopted for generating the transformation logic.

The system 100 first attempts to generate transformation logic without requiring additional input(s) from the user, utilizing the already available information, such as confirmed schema matching and, if available, metadata and source data. Large Language Models (LLMs) are instructed to generate a diverse set of transformations. As a post-processing step, those transformations are eliminated in which the LLM introduces new fields or removes existing ones. The transformation programs, along with explanations, are then generated in natural language, making them easier for the user to understand.

For some fields, determining the correct transformation based solely on the matching between the source and target fields can be challenging. For instance, if the target field is a conjunction of multiple source fields, identifying the correct order of the conjunction without examples is difficult. Therefore, additional context beyond simple matching is essential to accurately infer the transformation logic. Large Language Models (LLMs) tend to generate more accurate programs when provided with sample data (known in the art). However, feedback from some of the BPs regarding Auto-MI (Automatic-Migration) revealed that providing sample source-target data from scratch is often challenging and not always guaranteed.

To address this challenge, an additional step is introduced, where Large Language Models (LLMs) generate a sample of source and target data. When the source data is available, it can be used by Large Language Models (LLMs) to generate the corresponding target data as depicted in Table. 4, which is then processed for validation (e.g., either by the system 100 or with or without user involvement as mentioned above). This modification reduces the user's workload, as they now act primarily as a reviewer without the added responsibility of providing corresponding source-target sample data. Rather than limiting to only one type of specification, such as sample data, the workflow/method as described by the present disclosure supports multimodality by allowing specifications in natural language. The Large Language Models (LLMs) can interpret these natural language specifications, enabling the user to provide hints about the transformation logic without requiring explicit sample data. This makes the system 100 more versatile compared to the existing works and offers users a greater flexibility in how they approach the problem of data mapping.

**Table. 4: Prompt Template for Data Generation**

| |
|---|
| ``` 1 { 2 "Information": { 3 "Source Fields": [ 4 { 5 "Field Name": "[field-name]", 6 "Field Description": "[field-description]", 7 "Semantic Type": "[semantic-type]", 8 "Data": ["[data]"] 9 } 10 ], ``` |
| ``` 11 "Target Fields": [ 1 12 { 13 "Field Name": "[field-name]", 14 "Field Description": "[field-description]", 15 "Semantic Type": "[semantic-type]" 16 } 17 ] 18 } 19 } ``` |

Post verification/validation of the one or more transformation logics in natural language (e.g., either by the system 100 or with or without user involvement as mentioned above), the one or more transformation logics can be converted into any programming language, which is preferred by the user. This conversion can be achieved using Large Language Models (LLMs) (known in the art) or performed by the system 100 based on the optionally available user inputs.

The workflow for the system 100 has been designed to maximize efficiency while minimizing the cost of LLM usage. To achieve this, the proposed workflow allows for seamless integration of components from Auto-MI (Automatic-Migration) when needed across all phases. For example, schema enrichment can be performed using Auto-MI (Automatic-Migration) instead of Large Language Models (LLMs), and the Stage 1 matching, which uses sentence transformers, can be replaced with the Auto-MI (Automatic-Migration) matching component. This is viewed as an augmentation, where combining the results from both solutions enhances the confidence with which the outcomes are presented to the user. For transformation logic, once the corresponding sample source-target data has been generated, the Auto-MI (Automatic-Migration)'s PBE approach to generate the transformation logic. These transformation logics are guaranteed to be consistent with the provided sample data. If the PBE approach fails to produce a result, which is then resort to Large Language Models (LLMs), optimizing cost efficiency.

FIG. 4 illustrates a data mapping scenario, according to some embodiments of the present disclosure. Details of the data mapping scenario are explained above.

FIG. 5 illustrates an existing assistant tool, Auto-MI (Automatic-Migration) (known in the art) built using the classical AI approach. Details specific to Auto-MI (Automatic-Migration) (known in the art) are explained above.

IMPLEMENTATION AND EVALUATION: All experiments were conducted using the GPT-4 model (known in the art) for all LLM-related tasks and the text-embedding-3-large (known in the art) as the sentence embedding model used in the present disclosure. All the experiments were executed (in close collaboration with some of the Business Partners (BPs) or The subject matter experts (SMEs)), keeping in mind the cost factor of commercial Large Language Models (LLMs). A detailed Proof of Concepts (PoCs) with multiple BPs or the subject matter experts (SMEs) was conducted, where they provided their data mapping scenarios, which were used to evaluate the system 100. The results were verified against their supplied gold standard data mappings. In the present disclosure, the results of two PoCs have been presented including the one which was conducted with the BPs from the banking and financial domain, and the other was conducted with the BPs from the insurance domain.

PoC 1: This was conducted on a synthetic schema provided by a Banking and Finance BP, used in their internal training exercises. The source contains user information in 35 different fields, spread across three different tables, which are migrated to 45 target fields distributed across five different target tables. The gold standard, i.e., the correct schema matching and transformation logic was available for the entire schema, against which the generated results were compared. Corresponding source-target data was also provided.

PoC 2: The BP from the insurance sector provided the entire schema from three past data mappings for one of their real-life applications. A subset of 17 tables and 449 fields from the application is considered as the target schema (T). There were three different source schemas from the three data mappings, and relevant subsets (tables and fields) were selected from each of these sources so that they are migrated to T, without affecting other sections of the target schema. These source subsets are referred as A, B, and C. A contains 11 tables and 193 fields, B has 9 tables and 251 fields, and C has 11 tables and 392 fields. For the data transformation from A, B, and C to T, 54, 40, and 38 target fields were focused respectively, which were identified as critical fields by the BP. Sample source data was provided, but no corresponding target data was available. Table. 5 depicts number of tables and fields considered for both PoC1 and PoC2.

**Table. 5: Number of tables and fields considered for both PoC1 and PoC2.**

| | | Number of tables | Number of fields |
|---|---|---|---|
| PoC 1 | Source | 3 | 35 |
| | Target | 5 | 45 |
| PoC 2 | Source A | 11 | 193 |
| | Source B | 9 | 251 |
| | Source C | 11 | 392 |
| | Target | 17 | 449 |

Evaluation: The performance of the system 100 was presented for both PoCs. Since Large Language Models (LLMs) provide varying responses depending on the degree of context provided, the system 100 was executed for schema matching and schema enrichment with two different levels of knowledge as context. The first level involved no additional metadata or domain knowledge, relying solely on the domain knowledge available with the models. At the second level, the system 100 incorporated the available metadata and domain knowledge. For generating the transformation logic, the method of the present disclosure (system 100) was used. Additionally, the results of these PoCs were compared with those conducted using Auto-MI (Automatic-Migration), where applicable, to highlight the proposed approach's improvements over the latter.

Schema Enrichment: For schema enrichment, the system 100 was executed with both levels of context for one iteration each, using the default parameters and generating a single response. For both PoCs, it was observed that the method of the present disclosure outperformed the existing works/conventional systems, underscoring the significance of domain knowledge and metadata, especially when dealing with enterprise-specific terminologies and concepts. Further Auto-MI (Automatic-Migration) (known in the art) was run for one iteration of schema enrichment, providing it with the same metadata and domain knowledge. The results are presented in Table. 6, which shows the percentage of fields that required correction in either logical name expansion or semantic type assignment. Each row in Table. 6 illustrates a schema from the respective PoCs, while each column represents the performance of the respective approach (Auto-MI (Automatic-Migration) (known in the art), the method of the present disclosure.

**Table. 6: Percentage of table and field names needing correction after enrichment.**

| | | Auto-MI (Automatic-Migration) | The method of the present disclosure |
|---|---|---|---|
| PoC 1 | Source | 19% | 0 |
| | Target | 17% | 0 |
| PoC 2 | Source A | 21% | 14% |
| | Source B | 33% | 19% |
| | Source C | 43% | 26% |
| | Target | 17% | 9% |

The system 100, when provided with additional domain knowledge and metadata, demonstrated the best performance, significantly outperforming Auto-MI (Automatic-Migration) (known in the art) in all cases. Even without the additional information, the system 100 delivered considerably better results in the majority of the cases.

Schema Matching: After the enrichment phase, schema matching is performed using the method of the present disclosure. First, the quality of matches was demonstrated using sentence embeddings alone, followed by the results using Large Language Models (LLMs) (without any additional metadata or domain knowledge) to re-rank the top 20 matches. Finally, the results of re-ranking the top 20 matches using Large Language Models (LLMs) with the available metadata and domain knowledge are obtained/presented.

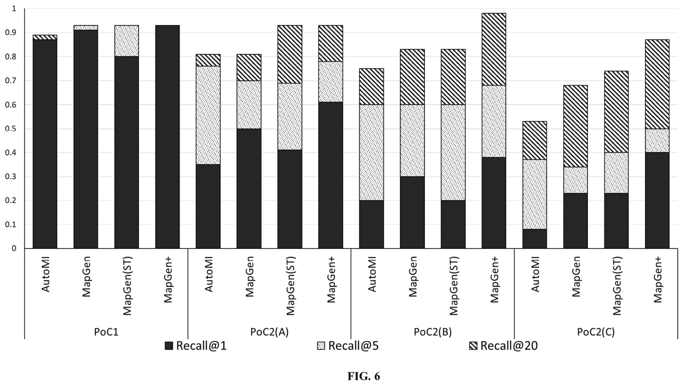

FIG. 6 illustrates Recall Scores [Recall@1, Recall@5, Recall@20] for Schema Matching Experiments alongside the performance of schema matching using Auto-MI (Automatic-Migration) (known in the art), according to some embodiments of the present disclosure. The LLM was run with default parameter settings for four different runs, and the mean rank across these four responses is considered.

The system and method of the present disclosure achieve the best possible scores for Recall@1 and Recall@5, as in current practices, a user undertaking data mapping typically reviews at most the top 5 matches suggested. Based on the experiments, it was concluded that sentence transformers alone do not provide a drastic improvement over Auto-MI (Automatic-Migration) (known in the art). The system's full schema matching workflow-re-ranking a selected set of top matches using sentence embeddings and leveraging the domain knowledge of Large Language Models (LLMs)-yields significantly better results than Auto-MI (Automatic-Migration) (known in the art). Furthermore, incorporating metadata and domain information enabled the system 100 to generate the best results.

Transformation Logic: The transformation logic produced by the method of the present disclosure was classified into four categories: correct, nearly correct, partially correct, and incorrect. A generated logic is correct if it matches both the syntax and values of the ground truth. A generated logic is nearly correct when it exactly matches the syntax of the ground truth but differs in value. For example, the desired logic might be, "If the age of the customer is > 60, then set Customer_Type to Senior Citizen", while the generated logic might be, "If the age of the customer is > 50, then set Customer_Type to Senior Citizen." Partially correct generated transformation logic captures a portion of the syntax of the desired logic, such as the generated logic containing part of an AND condition. Incorrectly generated logic is neither correct, nor nearly correct, nor partially correct.

PoC 1: The associated BP wanted to assess the performance of the system 100 using only matching, metadata, and domain knowledge, without the additional step of generating any sample target data. The system 100 was evaluated using the default temperature and four separate runs, with all the generated transformation logic considered for validation. The results are shown in Table 7. It is notable that, without any sample data, the method of the present disclosure generated correct transformation logic for 43 out of 45 target fields. For the 2 fields, the transformation logic was nearly correct, meaning the entire logic structure was correct but the values differed from the gold standard. When specifications were provided using natural language for these 2 fields, the system 100 generated correct logic.

The corresponding sample source-target data were provided, and Auto-MI (Automatic-Migration) (known in the art) was executed for generating transformation logic. Table. 7 shows the performance of Auto-MI (Automatic-Migration) (known in the art). Correct transformation logic was generated for 38 target fields by Auto-MI (Automatic-Migration) , while it was unable to generate transformation logic for 4 fields (due to implementation gaps in the synthesizers) and could generate partial transformations for 6 fields (due to insufficient sample data). Overall, the BP in collaboration with this PoC aimed for a minimum 50% reduction in the time taken for conducting data mapping when using the system 100 compared to their standard practice. This goal was successfully achieved, and the PoC was deemed a success.

**Table. 7: Performance of Auto-MI (Automatic-Migration) and the method of the present disclosure on PoC 1 (45 target fields)**

| | Correct | Nearly correct | Partially correct | Incorrect |
|---|---|---|---|---|
| Auto-MI (Automatic-Migration) | 35 | - | 6 | - |
| The method of the present disclosure | 43 | 2 | - | - |

PoC 2: Since only sample source data was provided and no corresponding target data, Auto-MI (Automatic-Migration) (known in the art) could not be evaluated in this experiment. A soft target was established for success (based on one or more user inputs (e.g., from BP): the approach would be deemed successful if it was able to generate correct and nearly correct transformation logic for at least 60% of the target fields across all three cases, with a focus on maximizing the correct transformations. Additional domain knowledge and available metadata could also be utilized. Additionally, it was decided to assess the performance of an alternative approach, generating sample target data first, followed by transformation logic, for the fields where correct logic could not be produced. Table. 8 shows the percentage (values rounded) of the types of transformation logic generated by the system 100, using default parameters and four separate runs.

**Table. 8: Performance of the method of the present disclosure in all 3 cases of PoC 2, source A (54 target fields), source B (40 target fields), source C (38 target fields)**

| | Correct | Nearly correct | Partially correct | Incorrect |
|---|---|---|---|---|
| Source A | 59% | 13% | 21% | 7% |
| Source B | 61% | 15% | 12% | 12% |
| Source C | 55% | 21% | 16% | 8% |

Amongst all two cases (Auto-MI and the method of the present disclosure), the method of the present disclosure supplied with all available domain knowledge and metadata) successfully surpassed the soft target. This success highlights a key advantage over Auto-MI (Automatic-Migration) (known in the art), as users are relieved from the additional burden of providing sample source-target data for a large portion of the target fields. One important aspect that was noted and shared with the BPs is that, unlike the PBE approach, using Large Language Models (LLMs) introduced the possibility of generating incorrect or flawed transformations (7%, 12%, and 8% for Source A, B, and C, respectively), as discussed in one of the earlier sections. In contrast, Auto-MI (Automatic-Migration) (known in the art) guarantees generating transformation logic consistent with the provided sample data, or else no program is generated.

Out of the target fields that failed to generate correct transformation logic, a subset of target fields from each of the three cases was selected for the additional step of generating sample target data based on the provided sample source data. The quality of the generated target data was assessed in relation to the transformation logic. Metadata for both source and target fields were supplied to the LLM for this task. For 20 target fields across the three cases, correct and nearly correct target data were generated for 9 and 3 target fields, respectively. The following example demonstrates the viability of the method of the present disclosure.

**Table. 9: Example for demonstrating the viability of the method of the present disclosure**

| |
|---|
| Source fields: Title, Forename |
| Target field: Party type code |
| Sample source data: Mr, John |
| Target data: IND |
| It was intelligently identified that the target field contains CODE values and since the given source fields are not null then it is an IND (individual's) details being stored |

The generated target data was corrected where necessary, these sample source-target pairs were added to the prompt, and to re-execute the system 100. For the 20 selected target fields, correct transformations were generated for 16 fields.

The results of the evaluation of the system 100 on the different schemas in the PoCs presented underline and illustrate the system 100 effectiveness in assisting with data mapping. Additionally, it demonstrates significant improvement in identifying both schema matching and transformation logic compared to Auto-MI (Automatic-Migration) (known in the art).

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

Traditional data mapping relies on manual techniques making process labor-intensive and prone to human error. The present disclosure provides a system and a method that leverage Large Language Models to address the challenges of data mapping. With their ability to understand and generate human-like text, the LLMs offer a transformative approach to both schema matching and generating transformation logic. The method of the present disclosure harnesses the power of LLMs to analyze and match schema fields with minimal user assistance. Moreover, LLMs facilitate intelligent generation of transformation logic by supporting multi-modal specifications, i.e., users can provide input in Natural Language (NL) as well as corresponding sample source-target data, thus overcoming the limitations of the traditional PBE approach.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300), comprising:
receiving (302), via one or more hardware processors, one or more physical names of (i) a plurality of source tables comprised in a source schema, (ii) a plurality of target tables comprised in a target schema, (iii) one or more source fields comprised in the plurality of source tables, (iv) one or more target fields comprised in the plurality of target tables, and (v) one or more Natural Language specifications;
enriching (304), by using one or more Large Language Models (LLMs) via the one or more hardware processors, the plurality of source tables, the plurality of target tables, the one or more source fields and the one or more target fields using one or more functionalities and one or more descriptions associated with the plurality of source tables, the plurality of target tables, the one or more source fields and the one or more target fields for:
(i) determining one or more logical names of (i) the plurality of source tables, (ii) the plurality of target tables, (iii) the one or more source fields and (iv) the one or more target fields; and
(ii) assigning one or more semantic types to each of (i) the one or more source fields and (ii) the one or more target fields, by applying a pre-defined configurable set of rules, based on the determined one or more logical names;
filtering (306), via the one or more hardware processors, each of the one or more source fields corresponding to the one or more target fields, based on the assigned one or more semantic types;
generating (308), via the one or more hardware processors, one or more vector embeddings for each of the filtered one or more source fields and one or more vector embeddings corresponding to the one or more target fields, using one or more sentence embedding models;
comparing (310), via the one or more hardware processors, the generated one or more vector embeddings for each of the filtered one or more source fields and the one or more vector embeddings corresponding to the one or more target fields;
generating (312), via the one or more hardware processors, a similarity score, for each of the filtered one or more source fields corresponding to the one or more target fields, based on the comparison, using one or more pre-defined similarity techniques;
generating (314), via the one or more hardware processors, a ranked list of the one or more source fields corresponding to the one or more target fields, based on the generated similarity score;
selecting (316), via the one or more hardware processors, at least a subset of ranked list *x* of the one or more source fields corresponding to the one or more target fields from the generated ranked list of the one or more source fields corresponding to the one or more target fields, based on a pre-defined threshold *k*;
performing (318), via the one or more hardware processors, at least one of the following:
(i) selecting one or more matches of the one or more source fields corresponding to the one or more target fields amongst at least the subset of ranked list x; or
(ii) re-ranking the one or more source fields (*x - k)* from the subset of ranked list *x* using the one or more Large Language Models (LLM) to obtain a re-ranked list;
generating (320), via the one or more hardware processors, one or more transformation logics by prompting the one or more Large Language Models (LLM), using a prompt template, based on the one or more selected matches or the obtained re-ranked list, and using at least one of:
(i) an associated data pertaining to the one or more target fields and the one or more source fields corresponding to the one or more selected matches or the one or more Natural Language specifications; or
(ii) an associated data being generated that is pertaining to the one or more target fields; and
validating (322), via the one or more hardware processors, the generated one or more transformation logics, and converting the validated one or more transformation logics into one or more user preferred programming languages.

2. The processor implemented method as claimed in claim 1, wherein the one or more sentence embedding models comprises at least one of an all-mpnet-base-v2 and a mxbai-embed-large-v1.

3. The processor implemented method as claimed in claim 1, wherein the one or more sematic types comprises at least one of an ID, a CODE, a FLAG and a RATE.

4. A system (100), comprising:
a memory (104) storing instructions;
one or more communication interfaces (112); and
one or more hardware processors (102) coupled to the memory (104) via the one or more communication interfaces (112), wherein the one or more hardware processors (102) are configured by the instructions to:
receive one or more physical names of (i) a plurality of source tables comprised in a source schema, (ii) a plurality of target tables comprised in a target schema, (iii) one or more source fields comprised in the plurality of source tables and (iv) one or more target fields comprised in the plurality of target tables;
enrich, by using one or more Large Language Models (LLMs), the plurality of source tables, the plurality of target tables, the one or more source fields and the one or more target fields using one or more functionalities and one or more descriptions associated with the plurality of source tables, the plurality of target tables, the one or more source fields and the one or more target fields for:
(i) determining one or more logical names of (i) the plurality of source tables, (ii) the plurality of target tables, (iii) the one or more source fields and (iv) the one or more target fields; and
(ii) assigning one or more semantic types to each of (i) the one or more source fields and (ii) the one or more target fields, by applying a pre-defined configurable set of rules, based on the determined one or more logical names;
filter each of the one or more source fields corresponding to the one or more target fields, based on the assigned one or more semantic types;
generate one or more vector embeddings for each of the filtered one or more source fields and one or more vector embeddings corresponding to the one or more target fields, using one or more sentence embedding models;
compare the generated one or more vector embeddings for each of the filtered one or more source fields and the one or more vector embeddings corresponding to the one or more target fields;
generate a similarity score, for each of the filtered one or more source fields corresponding to the one or more target fields, based on the comparison, using one or more pre-defined similarity techniques;
generate a ranked list of the one or more source fields corresponding to the one or more target fields, based on the generated similarity score;
select at least a subset of ranked list *x* of the one or more source fields corresponding to the one or more target fields from the generated ranked list of the one or more source fields corresponding to the one or more target fields, based on a pre-defined threshold *k*;
perform at least one of the following:
(i) selecting one or more matches of the one or more source fields corresponding to the one or more target fields amongst at least the subset of ranked list *x*; or
(ii) re-ranking the one or more source fields (*x* - *k*) from the subset of ranked list *x* using the one or more Large Language Models (LLM) to obtain a re-ranked list;
generate one or more transformation logics by prompting the one or more Large Language Models (LLM), using a prompt template, based on the one or more selected matches or the obtained re-ranked list, and using at least one of:
(i) an associated data pertaining to the one or more target fields and the one or more source fields corresponding to the one or more selected matches or the one or more Natural Language specifications; or
(ii) an associated data being generated that is pertaining to the one or more target fields; and
validate the generated one or more transformation logics and converting the validated one or more transformation logics into one or more user preferred programming languages.

5. The system as claimed in claim 4, wherein the one or more sentence embedding models comprises at least one of an all-mpnet-base-v2 and a mxbai-embed-large-v1.

6. The system as claimed in claim 4, wherein the one or more semantic types comprises at least one of an ID, a CODE, a FLAG and a RATE.

7. One or more non-transitory machine-readable information storage mediums comprising one or more instructions which when executed by one or more hardware processors cause:
receiving one or more physical names of (i) a plurality of source tables comprised in a source schema, (ii) a plurality of target tables comprised in a target schema, (iii) one or more source fields comprised in the plurality of source tables, (iv) one or more target fields comprised in the plurality of target tables, and (v) one or more Natural Language specifications;
enriching, by using one or more Large Language Models (LLMs), the plurality of source tables, the plurality of target tables, the one or more source fields and the one or more target fields using one or more functionalities and one or more descriptions associated with the plurality of source tables, the plurality of target tables, the one or more source fields and the one or more target fields for:
(i) determining one or more logical names of (i) the plurality of source tables, (ii) the plurality of target tables, (iii) the one or more source fields and (iv) the one or more target fields; and
(ii) assigning one or more semantic types to each of (i) the one or more source fields and (ii) the one or more target fields, by applying a pre-defined configurable set of rules, based on the determined one or more logical names;
filtering each of the one or more source fields corresponding to the one or more target fields, based on the assigned one or more semantic types;
generating one or more vector embeddings for each of the filtered one or more source fields and one or more vector embeddings corresponding to the one or more target fields, using one or more sentence embedding models;
comparing the generated one or more vector embeddings for each of the filtered one or more source fields and the one or more vector embeddings corresponding to the one or more target fields;
generating a similarity score, for each of the filtered one or more source fields corresponding to the one or more target fields, based on the comparison, using one or more pre-defined similarity techniques;
generating a ranked list of the one or more source fields corresponding to the one or more target fields, based on the generated similarity score;
selecting at least a subset of ranked list *x* of the one or more source fields corresponding to the one or more target fields from the generated ranked list of the one or more source fields corresponding to the one or more target fields, based on a pre-defined threshold k;
performing at least one of the following:
(i) selecting one or more matches of the one or more source fields corresponding to the one or more target fields amongst at least the subset of ranked list *x*; or
(ii) re-ranking the one or more source fields (*x - k*) from the subset of ranked list *x* using the one or more Large Language Models (LLM) to obtain a re-ranked list;
generating one or more transformation logics by prompting the one or more Large Language Models (LLM), using a prompt template, based on the one or more selected matches or the obtained re-ranked list, and using at least one of:
(i) an associated data pertaining to the one or more target fields and the one or more source fields corresponding to the one or more selected matches or the one or more Natural Language specifications; or
(ii) an associated data being generated that is pertaining to the one or more target fields; and
validating the generated one or more transformation logics, and converting the validated one or more transformation logics into one or more user preferred programming languages.

8. The processor implemented method as claimed in claim 7, wherein the one or more sentence embedding models comprises at least one of an all-mpnet-base-v2 and a mxbai-embed-large-v1.

9. The processor implemented method as claimed in claim 7, wherein the one or more sematic types comprises at least one of an ID, a CODE, a FLAG and a RATE.
